# EUROPEAN PATENT APPLICATION

(11) **EP 1 595 690 A2**
(43) Date of publication of application: **16.11.2005**
(21) Application number: 05103968.3
(22) Date of filing: 12.05.2005
(51) Int. Cl.: B29C 70/68, B29C 44/12, B60N 2/46

(54) **Method of producing an automotive cushioned supporting body and supporting body produced using such a method**

(30) Priority: 13.05.2004 IT TO20040311
(71) Applicant: Gestind S.p.A., 10050 Bruzolo (IT)
(72) Inventor: Pent, Giuliano, 10053 Bussoleno (IT)
(74) Representative: Jorio, Paolo

(57) **Abstract**

An automotive cushioned supporting body (4) is produced by forming a reinforcing structure (9), and embedding the reinforcing structure (9) in foam material; the reinforcing structure (9) being produced by forming a peripheral rigid frame (10), and fitting directly onto the rigid frame (10) a bag body (13) or sleeve body (18) made from folded sheet material, e.g. metal mesh.

## Description

The present invention relates to a method of producing an automotive cushioned supporting body, and to a supporting body produced using such a method.

More specifically, the present invention relates to a cushioned supporting body for an armrest, to which the following description refers purely by way of example.

One known method of producing a cushioned supporting body for an armrest is to form a rigid frame; place the rigid frame inside a mold; and fill the mold with foam material, in which the rigid frame is embedded.

The above known manufacturing method, commonly used for producing conventional "solid" armrests, is rarely applicable to so-called "hollow" armrests, i.e. having an inner compartment. In such armrests, in fact, the inner compartment is closed at the top by a plate-like lid, which performs the dual function of closing the compartment and forming a supporting wall for the user's forearm. Since the lid must be capable of withstanding external forces, while at the same time being as thin as possible for reasons of size and appearance, the rigid reinforcing frame inside the lid must comprise, in addition to a peripheral portion, a number of rigid cross members and/or plates, with or without appropriately spaced ribs, and connected integrally to the peripheral portion to define an extensive rigid skeleton. Rigid frames so produced are therefore complicated and relatively expensive to produce, as well as being fairly heavy.

It is an object of the present invention to provide a method of producing an automotive cushioned supporting body, designed to provide a straightforward, low-cost solution to the aforementioned drawbacks.

According to the present invention, there is provided a method of producing an automotive cushioned supporting body; the method comprising the steps of forming a rigid frame, forming a cushioned body, and inserting said rigid frame at least partly inside said cushioned body; and being characterized by comprising the further steps of connecting a reinforcing sheet material to said rigid frame to form a reinforcing structure of said cushioned body before the rigid frame is inserted inside said cushioned body.

Said sheet material is conveniently connected directly to said rigid frame.

The present invention also relates to an automotive cushioned supporting body.

According to the present invention, there is provided an automotive cushioned supporting body comprising a rigid frame, and a cushioned body in which the rigid frame is at least partly housed, and
characterized by also comprising a reinforcing sheet material connected to said rigid frame to form, with the rigid frame, a reinforcing structure of the cushioned body before the rigid frame is inserted inside said cushioned body.

Said sheet material of the cushioned supporting body defined above preferably has a number of through openings, and is conveniently a metal or plastic mesh.

A non-limiting embodiment of the invention will be described by way of example with reference to the accompanying drawings, in which:
Figure 1 shows a preferred embodiment of an automotive armrest produced in accordance with the teachings of the present invention and connected to a seat;
Figure 2 shows a larger-scale section along line II-II in Figure 1;
Figure 3 shows an exploded view, with parts removed for clarity, of the Figure 2 detail;
Figure 4 shows a larger-scale section along line IV-IV in Figure 2; and
Figure 5 is a figure similar to figure 4 and shows a variation of a detail in figure 4.

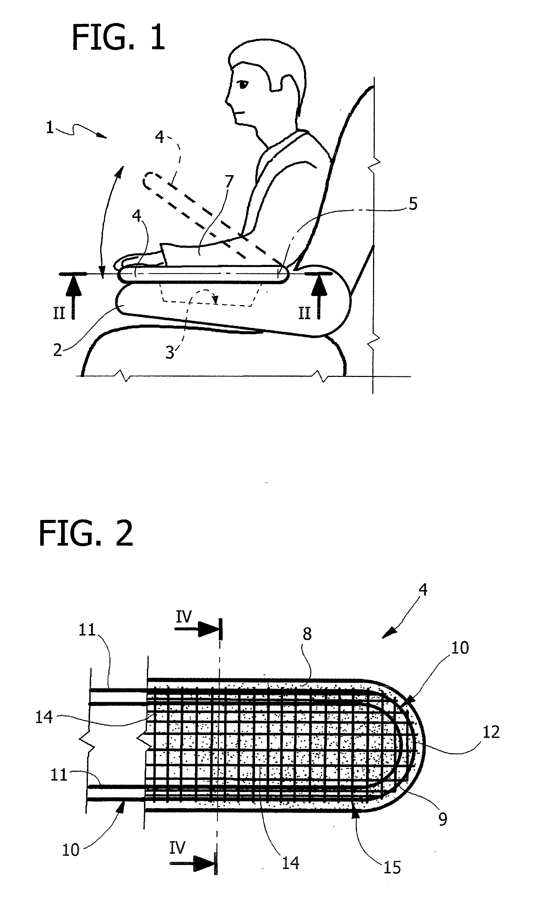

Number 1 in Figure 1 indicates as a whole an automotive armrest, in particular for motor vehicle, connected to a seat shown partly.

Armrest 1 comprises a hollow bottom body 2 defining a compartment 3; and a substantially plate-like top lid 4. Lid 4 is hinged to hollow body 2 to rotate, with respect to body 2 and about a fixed hinge axis 5, between a closed position, shown by the continuous line in Figure 1 and in which it closes the top of compartment 3 and defines a cushioned supporting body for the user's forearm 7, and an open position, shown by the dash line in Figure 1 and in which it permits access to compartment 3.

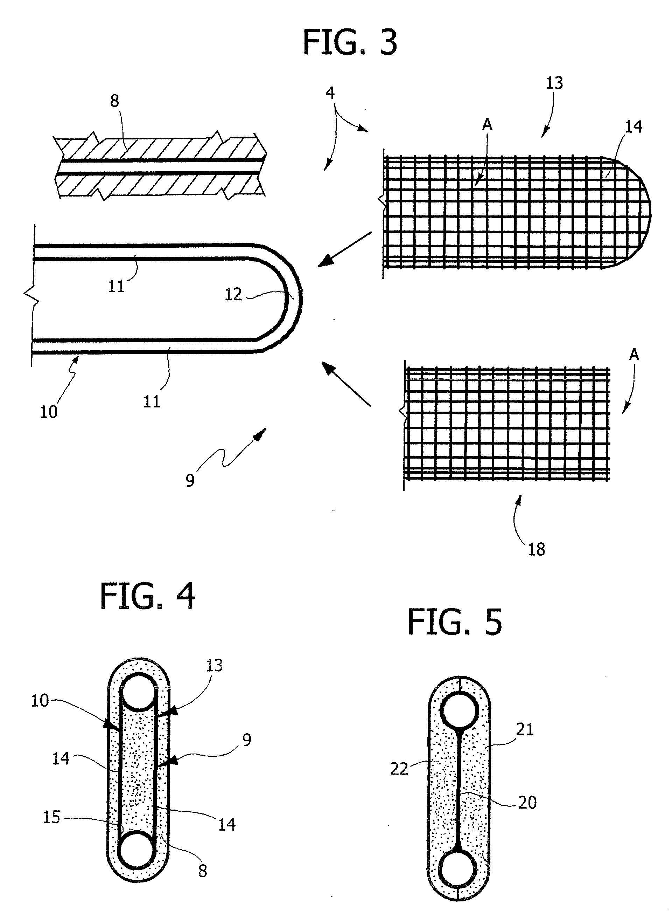

With reference to Figures 2 and 4, lid 4 comprises an outer cushioned body 8, and an inner reinforcing structure 9 for reinforcing cushioned body 8. Reinforcing structure 9 in turn comprises a rigid tubular peripheral frame 10, which is made of metal or plastic material, is U-shaped, and comprises two facing elongated straight portions 11, and a curved portion 12 connecting straight portions 11. Reinforcing structure 9 also comprises a bag body 13 fitted onto frame 10 and having two facing parallel walls 14 extending between straight portions 11, and a peripheral wall 15 partly enclosing frame 10.

Bag body 13 is made of sheet material A folded and joined integrally in known manner along its peripheral edges (Figure 3). The sheet material is selectable from a number of sheet materials, and, in the example described, is a mesh of metal or plastic material or variable-mesh fibre, depending on the type of armrest and the material and method used to form cushioned body 8. Alternatively, the sheet material is a heat-resistant fabric, with or without through openings.

With reference to Figure 3, a sleeve body 18 is substituted for bag body 13, is fitted onto frame 10 in the same way as bag body 13, and is also made of sheet material, the edges of which are joined only partly.

To produce bag body 13 or sleeve body 18 faster, the sheet material is first folded and joined to form an elongated tubular body, which is then cut transversely into a number of sleeve bodies 18, which may, if necessary, be worked on further to form bag bodies 13.

To produce lid 4 as described, peripheral frame 10 is first formed, and bag body 13 or sleeve body 18 is then formed depending on the application. Bag body 13 or sleeve body 18 is so sized as to be approximately equal to but no larger than the plan dimensions of frame 10, so that, when bag body 13 or sleeve body 18 is fitted onto frame 10, it is deformed elastically and, once assembled, the various parts of body 13 or 18 are stretched taut at least between straight portions 11 of peripheral frame 10. At this point, the reinforcing structure 9, defined by frame 10 and by bag body 13 or sleeve body 18 stretched taut, is inserted inside a mold, and foam material, e.g. polyurethane, is injected and flows through the openings in the sheet material to embed the sheet material and frame 10.

In an alternative embodiment shown in Figure 5, bag body 13 or sleeve body 18 is replaced by one or a number of superimposed flat sheets 20, which may or may not be perforated, and the peripheral portions of which are connected, e.g. tied, stitched, glued or in any other known manner, to rigid frame 10. At this point, the reinforcing structure 9 so formed may either be embedded in the foam material, as described above, or, as shown in Figure 5, may be gripped between two separate portions 21 and 22 of the cushioned body formed beforehand and then connected to one another in known manner. In the latter case, the sheet material is gripped between corresponding parts of said portions. In the example shown, cavities or seats, not shown in Figure 5, are formed on one of said portions, and projections, also not shown in Figure 5, are formed on the other portion to force and retain corresponding deformed portions of the sheet material inside the seats, once molding is completed.

In both the solutions described, the sheet material provides for homogeneously reinforcing cushioned body 8, so that, as compared with known solutions, the rigid frame is simplified and may be limited to simply a peripheral portion defined, in the example shown, by frame 10, thus greatly reducing manufacturing cost and weight. As regards cost and weight, producing a straightforward bag or sleeve body, or using an ordinary sheet of metal or plastic mesh or any other material capable of withstanding external tensile stress and/or heat, is obviously much easier, cheaper and faster than producing a rigid skeleton capable of equally homogeneous reinforcement.

Clearly, changes may be made to armrest 1 as described herein without, however, departing from the scope of the present invention.

More specifically, both the sheet material used and the way in which it is connected to rigid frame 10 may be other than as described herein; and the sheet material may be used to form tubular bodies other than those described and, for example, annular bands fitted to the rigid frame in variable relative positions, depending on external stress transmitted to the cushioned supporting body.

The production method described may also, obviously, be applied to the manufacture of components other than armrests, e.g. headrests, seat portions, and backrests of seats, and, generally speaking, any parts featuring a cushioned supporting body which must be reinforced, must be made quickly with no special equipment required, and must be as light as possible.

## Claims

1. A method of producing an automotive cushioned supporting body (4); the method comprising the steps of forming a rigid frame (10), forming a cushioned body (8), and inserting said rigid frame (10) at least partly inside said cushioned body (8); and being **characterized by** comprising the further steps of connecting a reinforcing sheet material (13; 18; 20) to said rigid frame (10) to form a reinforcing structure (9) of said cushioned body (8) before the rigid frame (10) is inserted inside said cushioned body (8).

2. A method as claimed in Claim 1, **characterized in that** forming said cushioned body (8) comprises the steps of injecting foam material into a mold; and **in that** said foam material is injected so as to at least partly embed said sheet material.

3. A method as claimed in Claim 1 or 2, **characterized in that** said sheet material is connected directly to said rigid frame (10).

4. A method as claimed in any one of the foregoing Claims, **characterized in that** said sheet material is stretched and connected to said rigid frame (10) so as to be and remain taut.

5. A method as claimed in Claim 3 or 4, **characterized in that** connection of said sheet material to said rigid frame (10) comprises the steps of folding the sheet material and firmly joining respective edges to form a tubular sleeve body (18); and fitting the sleeve body (18) directly onto said rigid frame (10).

6. A method as claimed in Claim 3 or 4, **characterized in that** connection of said sheet material to said rigid frame (10) comprises the steps of folding the sheet material and joining respective portions of the sheet material to form a bag body (13); and fitting the bag body (13) directly onto said rigid frame (10).

7. A method as claimed in any one of the foregoing Claims, **characterized by** preparing said sheet material by forming on it through openings engaged by corresponding parts of said cushioned body (8).

8. A method as claimed in any one of the foregoing Claims, **characterized by** deforming said sheet material to form on it seats for receiving corresponding parts of said cushioned body (8).

9. A method as claimed in Claims 5 and 6, **characterized in that** forming said sleeve body or said bag body comprises the steps of folding said sheet material to form an elongated tubular body; and cutting said tubular body transversely into two or more tubular portions.

10. An automotive cushioned supporting body (4) comprising a rigid frame (10), and a cushioned body (8) in which the rigid frame (10) is at least partly housed, and **characterized by** also comprising a reinforcing sheet material connected to said rigid frame (10) to form, with the rigid frame (10), a reinforcing structure (9) of said cushioned body (8) before the rigid frame (10) is inserted inside said cushioned body (8).

11. A supporting body as claimed in Claim 10, **characterized in that** said sheet material is at least partly embedded in said cushioned body (8).

12. A supporting body as claimed in Claim 10 or 11, **characterized in that** said sheet material is connected directly to said rigid frame (10).

13. A supporting body as claimed in one of Claims 10 to 12, **characterized in that** said sheet material is connected tautly to said rigid frame (10).

14. A supporting body as claimed in Claim 12 or 13, **characterized by** comprising a tubular sleeve body (18) made of said sheet material; said sleeve body (18) being fitted directly onto said rigid frame (10).

15. A supporting body as claimed in Claim 12 or 13, **characterized by** comprising a bag body (13) made of said sheet material; said bag body (13) being fitted onto said rigid frame (10).

16. A supporting body as claimed in any one of Claims 10 to 15, **characterized in that** said sheet material has through openings engaged by corresponding parts of said cushioned body (8).

17. A supporting body as claimed in any one of Claims 10 to 16, **characterized in that** said sheet material has seats engaged by corresponding parts of said cushioned body (8).

18. A supporting body as claimed in any one of Claims 10 to 17, **characterized in that** said sheet material is a metal or plastic mesh.
